# EUROPÄISCHE PATENTSCHRIFT

(11) **EP 1 126 252 B1**
(45) Veröffentlichungstag und Bekanntmachung des Hinweises auf die Patenterteilung: **02.04.2008**
(21) Anmeldenummer: 01101904.9
(22) Anmeldetag: 27.01.2001
(51) Int. Cl.: G01F 23/36

(54) **Füllstandsgeber für einen Kraftstofftank**
Level indicator for fuel tank
Indicateur de niveau pour réservoir de carburant

(30) Priorität: 18.02.2000 DE 10007381
(43) Veröffentlichungstag der Anmeldung: 22.08.2001
(73) Patentinhaber: Bayerische Motoren Werke Aktiengesellschaft, 80809 München (DE)
(72) Erfinder: Schmid, Johann Matthias, 81245 München (DE); Krings, Frank, 82140 Olching (DE)

(56) Entgegenhaltungen:
- DE-A- 19 709 738
- FR-A- 2 675 898
- GB-A- 2 270 760

## Beschreibung

Die Erfindung betrifft einen Füllstandsgeber für einen Fahrzeug-Kraftstofftank der sog. Sattel-Bauart mit zwei Kammern, wobei zwischen diesen ein Messsignalaufnehmer gelagert ist, dem für jede Kammer ein insbesondere schwenkbarer und mechanisch an den Messsignalaufnehmer gekoppelter Messwertgeber zugeordnet ist, wobei der Messsignalaufnehmer ein Signalgeberelement und ein Signalempfängerelement aufweist und die Position der Messwertgeber anhand der Position des beweglichen Signalgeberelementes relativ zum Signalempfängerelement ermittelt wird. Zum technischen Umfeld wird neben der FR 2 675 898 A auf die DE 197 09 738 A1 verwiesen.

In der letztgenannten Schrift ist eine Messvorrichtung für den Füllstand eines Flüssigkeitsbehälters, insbesondere eines Kraftstofftanks für Brennkraftmaschinen beschrieben, wobei dieser Füllstandsmesser einen vom Flüssigkeitsspiegel lagegesteuerten Messwertgeber und einen mit diesem zur Erzeugung eines den Füllstand markierenden Messwertsignals zusammenwirkenden, behälterfesten Messwertaufnehmer, sowie einen das Messwertsignal in eine Füllstandsanzeige umsetzende Anzeigeeinheit aufweist. Weiterhin ist zur getrennten Erfassung der Füllstände im zumindest zweikammerigen Flüssigkeitsbehälter, vorzugsweise in einen sog. Satteltank für Kraftfahrzeuge, zumindest ein weiterer Füllstandsmesser mit Messwertgeber, Messwertaufnehmer und Anzeigeeinheit vorgesehen. Zur baulichen Vereinfachung sind dabei die Messwertgeber und Messwertaufnehmer der Füllstandsmesser in einem gemeinsamen, am Flüssigkeitsbehälter festgelegten Gehäuse aufgenommen.

In der weiterhin genannten FR 2 675 898 A ist ein Füllstandsgeber für einen Fahrzeug-Kraftstofftank beschrieben, der auch bei geneigtem Tank ein repräsentatives Messergebnis liefert, indem an einem ersten, über eine Parallelogrammführung geführten Schwimmer ein zweiter Schwimmer in üblicher Weise angekoppelt ist.

Zurückkommend auf die genannte DE 197 09 738 A1, von welcher die vorliegende Erfindung ausgeht, ist diese bekannte Messvorrichtung trotz der baulichen Vereinfachung durch Zusammenfassung in einem einzigen Gehäuse relativ aufwändig. So sind zwei separate sog. Meßwertaufnehmer vorgesehen bzw. erforderlich, obwohl doch eigentlich nur der Füllstand in den beiden Kammern des Flüssigkeitsbehälters unter gemeinsamer Betrachtungsweise interessiert, d.h. eigentlich soll nur der sog. Summen-Füllstand in den beiden Kammern oder der Gesamt-Füllstand im Flüssigkeitsbehälter ermittelt werden. Hierfür ist es grundsätzlich unerheblich, welche Füllstände nun in den einzelnen Kammern vorliegen, da diese einzelnen Füllstände nur wieder zu einem Summen-Füllstand zusammengefasst werden, was im übrigen abermals eine aufwendige Rechenoperation darstellen kann.

Einen demgegenüber vereinfachten Meßsignalaufnehmer nach dem Oberbegriff des Anspruchs 1 aufzuzeigen, ist Aufgabe der vorliegenden Erfindung.

Die Lösung dieser Aufgabe ist dadurch gekennzeichnet, daß der eine (erste) Meßwertgeber mit dem Signalgeberelement gekoppelt und somit mit diesem mechanisch verbunden ist, während der zweite Messwertgeber mit dem einzigen, geeignet gegenüber dem Signalgeberelement bewegbar gelagerten Signalempfängerelement gekoppelt und somit mit diesem mechanisch verbunden ist. Vorteilhafte Aus- und Weiterbildungen sind Inhalt der Unteransprüche.

Besonders anschaulich läßt sich die vorliegende Erfindung anhand eines elektrischen Drehpotentiometers als Meßsignalaufnehmer erläutern, was im folgenden ohne Bezugnahme auf eine Figurendarstellung erfolgt, wobei ein bevorzugter Einsatzfall, nämlich ein Drehpotentiometer-Füllstandsgeber für einen in Sattelbauweise ausgeführten Kraftstofftank eines Kraftfahrzeuges auch bereits im eingangs genannten Stand der Technik gezeigt ist. Ausdrücklich sei darauf hingewiesen, daß die Erfindung anstelle eines Drehpotentiometers jedoch auch an einem Hallsignalgeber oder anderen bekannten Meßsignalaufnehmern umgesetzt werden kann.

Bekanntermaßen besteht ein elektrisches Drehpotentiometer u.a. aus einer elektrischen Widerstandsbahn sowie einem Schleifer, der drehbar beweglich gelagert ist und über diese kreisförmige Widerstandsbahn geführt wird. Dabei kann dieser Schleifer auch als Signalgeberelement bezeichnet werden, da dessen unterschiedliche Positionen relativ zur Widerstandsbahn zu einer Signalabgabe führen und anhand der Größe dieses Signales (d.h. des elektrischen Widerstandes bzw. des elektrischen Spannungsabfalles am Drehpotentiometer) die Position des Schleifers festgestellt werden kann. Ist nun mit diesem Schleifer ein irgendwie gearteter Meßwertgeber gekoppelt bzw. mechanisch geeignet verbunden, so kann anhand der vom Drehpotentiometer abgegebenen Signale auch die Position des Meßwertgebers ermittelt werden. Bspw. bzw. bevorzugt kann es sich bei diesem Meßwertgeber um einem Schwimmer handeln, der den Flüssigkeitsstand in einem Fahrzeugtank bzw. in einer ersten Kammer eines sog. Sattel-Tankes repräsentiert.

Die bereits genannte Widerstandsbahn des Drehpotentiometers kann auch als Signalempfängerelement bezeichnet werden, da diese quasi vom Schleifer ein Positionssignal empfängt, d.h. da diese Widerstandsbahn aufnimmt oder empfängt, an welcher Stelle sich der drehbare Schleifer gerade befindet. Dabei ist im bekannten Stand der Technik diese Widerstandsbahn eines Drehpotentiometers bzw. allgemein das sog. Signalempfängerelement unbeweglich angeordnet, da gewährleistet sein soll, daß sich das sog. Signalgeberelement definiert gegenüber dem Signalempfängerelement bewegen kann.

Erfindungsgemäß wird nun jedoch vorgeschlagen, auch das Signalempfängerelement (d.h. im Falle eines Drehpotentiometers die kreisförmige Widerstandsbahn) geeignet beweglich zu lagern und einen zweiten Meßwertgeber mechanisch an dieses Signalempfängerelement zu koppeln. Im bevorzugten Anwendungsfall eines Fahrzeug-Kraftstofftankes handelt es sich bei diesem zweiten Meßwertgeber abermals um einen Schwimmer, und zwar um den den Flüssigkeitsstand in der anderen, zweiten Kammer des Tankes repräsentierenden Schwimmer. Somit kann auch das Signalempfängerelement durch den zweiten Meßwertgeber derart unterschiedlich positioniert werden, daß die Position dieses zweiten Meßwertgebers mit dem Meßsignalaufnehmer, von welchem das sog. Signalempfängerelement ein Bestandteil ist, festgestellt werden kann.

Anhand des folgenden Gedankenexperimentes sei die Funktionsweise eines erfindungsgemäßen Meßsignalaufnehmers nochmals erläutert. In einer linken Kammer eines Fahrzeug-Kraftstofftankes befinde sich ein erster Schwimmer oder Meßwertgeber, der über einen Hebelarm mit dem verdrehbaren Schleifer (= Signalgeberelement) eines Drehpotentiometers (= Meßsignalaufnehmer) mechanisch verbunden ist, welches bzw. welcher zwischen der linken Kammer und der rechten Kammer dieses Fahrzeugtanks selbst um die Potentiometer-Drehachse verdrehbar gelagert ist. Ein in der rechten Kammer des Fahrzeugtanks vorgesehener Schwimmer sei über einen Hebelarm mit dem Gehäuse dieses Drehpotentiometers mechanisch verbunden, innerhalb dessen die Widerstandsbahn (= Signalempfängerelement) des Drehpotentiometers (= Meßsignalaufnehmers) fest bzw. starr am Gehäuse des Drehpotentiometers befestigt ist.

Nun verändere sich nur der Flüssigkeitsstand in der linken Kammer, so daß eine entsprechende Auslenkbewegung des Schwimmers (=Meßwertgebers) zu einer Drehbewegung des Schleifers des Drehpotentiometers führt, welches sich mit seinem Gehäuse über den zweiten Meßwertgeber fest auf dem unveränderten Flüssigkeitsstand bzw. auf der Flüssigkeitsoberfläche in der rechten Kammer des Fahrzeugtanks abstützt. Soweit funktioniert der erfindungsgemäße Meßsignalaufnehmer wie im bekannten Stand der Technik.

Gedanklich verändere sich nun nur und alleinig der Flüssigkeitsstand in der rechten Kammer des Fahrzeug-Satteltanks, so daß eine entsprechende Auslenkbewegung des zweiten Schwimmers (=Meßwertgebers) zu einer Drehbewegung der Widerstandsbahn (= Signalempfängerelementes) des Drehpotentiometers (= Meßwertaufnehmers) führt, während sich dessen Schleifer über den ersten Meßwertgeber fest auf dem unveränderten Flüssigkeitsstand bzw. auf der Flüssigkeitsoberfläche in der linken Kammer des Fahrzeugtanks abstützt. Auch eine solche Änderung im Flüssigkeitsstand kann mit einem erfindungsgemäßen Meßsignalaufnehmer erkannt werden, welcher dann jedoch lediglich analog dem bekannten Stand der Technik funktioniert, da dort das sog. Signalempfängerelement ja ortsfest ist.

Nachdem nun sowohl eine Änderung des Flüssigkeitsstandes nur in der linken Tankkammer als auch eine Änderung des Flüssigkeitsstandes nur in der rechten Tankkammer festgestellt werden kann, kann logischerweise mit einem erfindungsgemäßen Meßsignalaufnehmer auch eine Änderung im Flüssigkeitsstand in beiden Tankkammern registriert werden. Mit einem einzigen Meßsignalaufnehmer, bestehend aus einem sog. Signalgeberelement und einem sog. Signalempfängerelement, läßt sich somit bspw. der Füllstand in zwei Kammern eines Fahrzeug-Kraftstofftankes oder dgl. ermitteln, wo vorteilhafterweise auch keine aufwendige Auswertelogik erforderlich ist. Dabei sei ausdrücklich darauf hingewiesen, daß es selbstverständlich auch andere Anwendungsfälle und andere Meßwertgeber geben kann, als hier erläutert. So wurde bereits ein Hallsiganalaufnehmer als Signalempfängerelement und ein Hallsignalgeber als Signalgeberelemnet erwähnt. Daneben können aber das Signalempfängerelement und das Signalgeberelement auch durch eine Magnetspule mit zugehörigem Kern oder allgemein durch ein induktives oder kapazitives oder optisches oder auf Ultraschall- oder Radarbasis arbeitendes Sender- oder Gebersystem mit zugehörigem Empfängersystem gebildet werden.

## Patentansprüche

1. Füllstandsgeber für einen Fahrzeug-Kraftstofftank der sog. Sattel-Bauart mit zwei Kammern, wobei zwischen diesen ein Messsignalaufnehmer gelagert ist, dem für jede Kammer ein insbesondere schwenkbarer und mechanisch an den Messsignalaufnehmer gekoppelter Messwertgeber zugeordnet ist, wobei der Messsignalaufnehmer ein Signalgeberelement und ein Signalempfängerelement aufweist und die Position der Messwertgeber anhand der Position des beweglichen Signalgeberelementes relativ zum Signalempfängerelement ermittelt wird,
**dadurch gekennzeichnet, dass** der erste Messwertgeber mit dem Signalgeberelement gekoppelt und somit mit diesem mechanisch verbunden ist, während der zweite Messwertgeber mit dem einzigen, geeignet gegenüber dem Signalgeberelement bewegbar gelagerten Signalempfängerelement gekoppelt und somit mit diesem mechanisch verbunden ist.

2. Meßsignalaufnehmer nach Anspruch 1,
**dadurch gekennzeichnet, dass** das Signalempfängerelement und der zweite Meßwertgeber am Gehäuse des Messsignalaufnehmers befestigt sind.

3. Meßsignalaufnehmer nach Anspruch 1 oder 2,
**dadurch gekennzeichnet, daß** das Signalempfängerelement die Widerstandsbahn eines Drehpotentiometers oder ein Hallsignalaufnehmer ist und daß das Signalgeberelement der Schleifer eines Drehpotentiometers oder ein Hallsiganalgeber ist.

4. Meßsignalaufnehmer nach Anspruch 1 oder 2,
**dadurch gekennzeichnet, daß** das Signalempfängerelement und das Signalgeberelement durch eine Magnetspule mit zugehörigem Kern oder allgemein durch ein induktives oder kapazitives oder optisches oder auf Ultraschall- oder Radarbasis arbeitendes Sender- oder Gebersystem mit zugehörigem Empfängersystem gebildet werden.

5. Meßsignalaufnehmer nach einem der vorangegangenen Ansprüche,
**dadurch gekennzeichnet, daß** die Meßwertgeber als mit Hebelarmen versehene Schwimmer ausgebildet sind.

## Claims

1. A level sensor for a vehicle fuel tank of the so-called saddle design with two chambers, wherein, mounted between the latter is a measurement signal detector, to which a measurement value sensor, which is more especially pivotable and mechanically coupled to the measurement signal detector is allocated for each chamber, the measurement signal detector having a signal sensor element and a signal receiver element, and the position of the measurement value sensor being determined relative to the signal receiver element with the aid of the position of the moveable signal sensor element, **characterised in that** the first measurement value sensor is coupled to the signal sensor element and is therefore mechanically coupled thereto, while the second measurement value sensor is coupled to the single signal receiver element which is suitably moveably mounted relative to the signal sensor element and is therefore mechanically connected to said signal receiver element.

2. A measurement signal detector according to claim 1, **characterised in that** the signal receiver element and the second measurement value sensor are fastened to the housing of the measurement signal detector.

3. A measurement signal detector according to claim 1 or 2, **characterised in that** the signal receiver element is the resistance path of a rotating potentiometer or a Hall signal detector, and **in that** the signal sensor element is the slider of a rotating potentiometer or a Hall signal sensor.

4. A measurement signal detector according to claim 1 or 2, **characterised in that** the signal receiver element and the signal sensor element are formed by a magnet coil with an associated core or in general by a transmitter or sensor system that is inductive or capacitive or optical or that works on the basis of ultrasound or radar.

5. A measurement signal detector according to any one of the preceding claims, **characterised in that** the measurement value sensors are configured as floats provided with lever arms.

## Revendications

1. Indicateur de niveau de remplissage pour un réservoir de carburant de véhicule de type dit selle comprenant deux chambres, un capteur de signal de mesure logé entre celles-ci et associé pour chaque chambre à un émetteur de valeur de mesure en particulier pivotant et couplé mécaniquement au capteur de signal de mesure, le capteur de signal de mesure présentant un élément d'émission de signal et un élément de réception de signal, et la position de l'émetteur de valeur de mesure étant déterminée à l'aide de la position de l'élément d'émission de signal mobile par rapport à l'élément de réception de signal,
**caractérisé en ce que**
le premier émetteur de valeur de mesure est couplé à l'élément d'émission de signal et est ainsi relié mécaniquement à celui-ci, tandis que le deuxième émetteur de valeur de mesure est couplé à l'unique élément de réception de signal, logé de façon mobile de manière appropriée par rapport à l'élément d'émission de signal et est ainsi relié mécaniquement à celui-ci.

2. Capteur de signal de mesure selon la revendication 1,
**caractérisé en ce que**
l'élément de réception de signal et le deuxième émetteur de valeur de mesure sont fixés au boîtier du capteur de signal de mesure.

3. Capteur de signal de mesure selon la revendication 1 ou 2,
**caractérisé en ce que**
l'élément de réception de signal est la piste résistive d'un potentiomètre rotatif ou un capteur de signal de Hall, et l'élément d'émission de signal est le curseur d'un potentiomètre rotatif ou un émetteur de signal de Hall.

4. Capteur de signal de mesure selon la revendication 1 ou 2,
**caractérisé en ce que**
l'élément de réception de signal et l'élément d'émission de signal sont formés par une bobine magnétique avec un noyau associé ou plus généralement par un système d'émission inductif ou capacitif ou optique ou fonctionnant sur la base d'ultrasons ou sur une base radar avec un système de réception associé.

5. Capteur de signal de mesure selon l'une des revendications précédentes,
**caractérisé en ce que**
l'émetteur de valeur de mesure est configuré sous la forme d'un flotteur pourvu de bras de levier.
